# EUROPEAN PATENT APPLICATION

(11) **EP 4 129 891 A1**
(43) Date of publication of application: **08.02.2023**
(21) Application number: 21780356.8
(22) Date of filing: 26.03.2021
(51) Int. Cl.: C01B 3/02, C01B 3/26

(54) **HYDROGEN SUPPLY SYSTEM**

(30) Priority: 30.03.2020 JP 2020060427
(71) Applicant: ENEOS Corporation, Chiyoda-ku Tokyo 100-8162 (JP)
(72) Inventor: SEIKE, Tadashi, Tokyo 100-8162 (JP); IKI, Hideshi, Tokyo 100-8162 (JP); MAEDA, Seiji, Tokyo 100-8162 (JP)
(74) Representative: Grünecker Patent- und Rechtsanwälte PartG mbB
(86) International application number: PCT/JP2021/012912
(87) International publication number: WO 2021/200674

(57) **Abstract**

Provided is a hydrogen supply system that supplies hydrogen. The hydrogen supply system includes: a dehydrogenation reaction unit that subjects a raw material including a hydride to a dehydrogenation reaction to obtain a hydrogen-containing gas; a circulation system that circulates a reaction inactive fluid to the dehydrogenation reaction unit; and a control unit that controls the hydrogen supply system. The control unit circulates the reaction inactive fluid with the circulation system in a case where production of the hydrogen-containing gas in the dehydrogenation reaction unit is stopped.

## Description

### Technical Field

The present disclosure relates to a hydrogen supply system that supplies hydrogen.

### Background Art

As a hydrogen supply system in the related art, for example, a hydrogen supply system disclosed in Patent Literature 1 is known. The hydrogen supply system disclosed in Patent Literature 1 includes a tank that store a hydride of aromatic hydrocarbon as a raw material, a dehydrogenation reaction unit that subjects the raw material supplied from the tank to a dehydrogenation reaction to obtain hydrogen, a gas-liquid separation unit for gas-liquid separation of the hydrogen obtained in the dehydrogenation reaction unit, and a hydrogen purification unit that purifies the gas-liquid separated hydrogen.

### Citation List

### Patent Literature

Patent Literature 1: Japanese Unexamined Patent Publication No. 2006-232607

### Summary of Invention

### Technical Problem

In the above-described hydrogen supply system, in a case where production of the hydrogen-containing gas in the dehydrogenation reaction unit is stopped, when restarting production of the hydrogen-containing gas, activation time for activating the system is required. The activation time is required to be shortened. Here, for example, in a water vapor reforming method, or the like, in order to activate the system early, the system may standby after circulating an inert gas such as a nitrogen gas or a product hydrogen gas through a reformer while heating the reformer with a fuel (that is, no raw material input). When restarting hydrogen production, a standby method in which the raw material is put into the reformer is employed to perform operation with a minimum load at which in-system heat balance is obtained. However, in the method, since a reaction in a reforming unit proceeds, there is a problem that a loss of a raw material or produced hydrogen occurs.

The present disclosure has been made to solve the problem, and an object thereof is to provide a hydrogen supply system capable of efficiently activating a system while suppressing a loss of a raw material or produced hydrogen.

### Solution to Problem

To solve the above-described problem, according to an aspect of the present disclosure, there is provided a hydrogen supply system that supplies hydrogen. The hydrogen supply system includes: a dehydrogenation reaction unit that subjects a raw material including a hydride to a dehydrogenation reaction to obtain a hydrogen-containing gas; a circulation system that circulates a reaction inactive fluid to the dehydrogenation reaction unit; and a control unit that controls the hydrogen supply system. The control unit circulates the reaction inactive fluid with the circulation system in a case where production of the hydrogen-containing gas in the dehydrogenation reaction unit is stopped.

In the hydrogen supply system, the dehydrogenation reaction unit subjects a raw material including a hydride to a dehydrogenation reaction to obtain a hydrogen-containing gas. The dehydrogenation reaction unit performs the dehydrogenation reaction in a state in which a catalyst is heated. Here, the control unit circulates a reaction inactive fluid with the circulation system in a case where production of the hydrogen-containing gas in the dehydrogenation reaction unit is stopped. In this case, the dehydrogenation reaction unit can stand by while maintaining a temperature by causing the reaction inactive fluid to pass therethrough instead of the raw material. Since the dehydrogenation reaction unit does not perform the dehydrogenation reaction, a loss of the raw material or hydrogen can be suppressed. In addition, since the hydrogen supply system is subjected to a standby operation while maintaining a temperature of the dehydrogenation reaction, the hydrogen supply system can be activated early. As described above, the system can be efficiently activated while suppressing a loss of the raw material or produced hydrogen.

The circulation system may circulate a dehydrogenation product produced by the dehydrogenation reaction. In this case, the fluid produced in the dehydrogenation reaction unit can be used as is as a fluid for circulation on standby.

The circulation system may circulate a fluid from the outside. In this case, an appropriate amount of fluid can be circulated by the circulation system.

### Advantageous Effects of Invention

According to the present disclosure, it is possible to provide a hydrogen supply system capable of efficiently activating a system while suppressing a loss of a raw material or produced hydrogen.

### Brief Description of Drawings

FIG. 1 is a block diagram illustrating a configuration of a hydrogen supply system according to an embodiment of the present disclosure.
FIG. 2 is a block diagram illustrating operation contents of the hydrogen supply system in a typical operation state.
FIG. 3 is a block diagram illustrating operation contents of the hydrogen supply system in a standby state.

### Description of Embodiments

Hereinafter, an appropriate embodiment of a hydrogen supply system according to the present disclosure will be described in detail with reference to the accompanying drawing. In the following description, the same reference numeral will be given of the same or equivalent portion, and redundant description will be omitted.

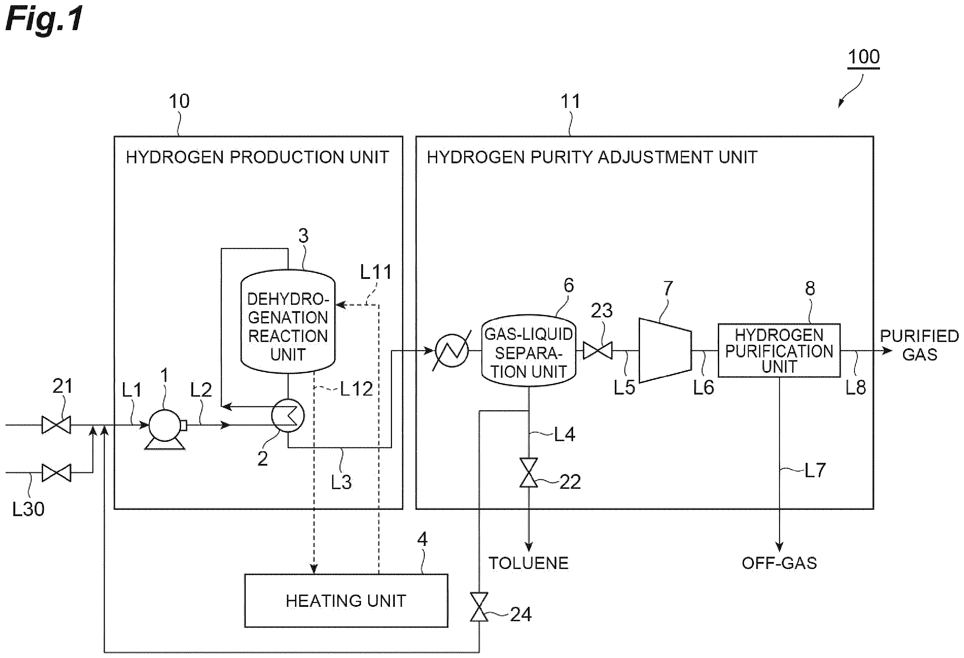

FIG. 1 is a block diagram illustrating a configuration of the hydrogen supply system according to the embodiment of the present disclosure. A hydrogen supply system 100 uses an organic compound (a liquid at an ordinary temperature) as a raw material. Note that, in a hydrogen purification process, a dehydrogenation product (organic compound (liquid at an ordinary temperature)) obtained by dehydrogenating the organic compound (a liquid at an ordinary temperature) that is a raw material is removed. Examples of the organic compound that is a raw material include an organic hydride. An appropriate example of the organic hydride is a hydride obtained by causing hydrogen that is massively produced at an oil refinery and aromatic hydrocarbon to react with each other. In addition, the organic hydride is not limited to aromatic hydrogenated compound, and includes 2-propanol system (hydrogen and acetone are produced). The organic hydride can be transported to the hydrogen supply system 100 by a tank lorry as a liquid fuel in a similar manner as in gasoline or the like. In this embodiment, as the organic hydride, methyl cyclohexane (hereinafter, referred to as "MCH") is used. In addition, as the organic hydride, a hydride of aromatic hydrocarbon such as cyclohexane, dimethyl cyclohexane, ethyl cyclohexane, decalin, methyl decalin, dimethyl decalin, and ethyl decalin is applicable. Note that, an aromatic compound is an appropriate example in which the amount of hydrogen contained is particularly large. The hydrogen supply system 100 can supply hydrogen to a fuel cell vehicle (FCV) or a hydrogen engine vehicle. Note that, application can also be made to a case of producing hydrogen from a natural gas containing methane as a main component, LPG containing propane as a main component, or liquid hydrocarbon raw materials such as gasoline, naphtha, kerosene, and light oil.

As illustrated in FIG. 1, the hydrogen supply system 100 according to this embodiment includes a liquid transfer pump 1, a heat exchange unit 2, a dehydrogenation reaction unit 3, a heating unit 4, a gas-liquid separation unit 6, a compression unit 7, and a hydrogen purification unit 8. Among these, the liquid transfer pump 1, the heat exchange unit 2, and the dehydrogenation reaction unit 3 pertain to a hydrogen production unit 10 that produces a hydrogen-containing gas. In addition, the gas-liquid separation unit 6, the compression unit 7, and the hydrogen purification unit 8 pertain to a hydrogen purity adjustment unit 11 that raises the purity of hydrogen. In addition, the hydrogen supply system 100 includes lines L1 to L12. Note that, in this embodiment, description will be given of a case where MCH is employed as a raw material, and a dehydrogenation product removed in a hydrogen purification process is toluene as an example. Note that, actually, not only toluene but also unreacted MCH, a small amount of by-products, and impurities exist, but in this embodiment, these are considered to be mixed with toluene and show the same behavior as in the toluene. Accordingly, in the following description, it is assumed that "toluene" is intended to include unreacted MCH and by-products.

The lines L1 to L12 are flow paths through which MCH, toluene, a hydrogen-containing gas, an off-gas, high-purity hydrogen, or a heating medium passes. The line L1 is a line for pumping MCH from an MCH tank (not illustrated) by the liquid transfer pump 1, and connects the liquid transfer pump 1 and the MCH tank to each other. The line L2 connects the liquid transfer pump 1 and the dehydrogenation reaction unit 3 to each other. The line L3 connects the dehydrogenation reaction unit 3 and the gas-liquid separation unit 6 to each other. The line L4 connects the gas-liquid separation unit 6 and a toluene tank (not illustrated) to each other. The line L5 connects the gas-liquid separation unit 6 and the compression unit 7 to each other. The line L6 connects the compression unit 7 and the hydrogen purification unit 8 to each other. The line L7 connects the hydrogen purification unit 8 and a supply destination of the off-gas to each other. The line L8 connects the hydrogen purification unit 8 and a purified gas supply device (not illustrated) to each other. The lines L11 and L12 connect the heating unit 4 and the dehydrogenation reaction unit 3 to each other. The lines L11 and L12 circulate a heat medium.

The liquid transfer pump 1 supplies MCH that becomes a raw material to the dehydrogenation reaction unit 3. Note that, MCH transported from the outside by a tank lorry or the like is stored in the MCH tank. MCH stored in the MCH tank is supplied to the dehydrogenation reaction unit 3 through the lines L1 and L2 by the liquid transfer pump 1.

The heat exchange unit 2 performs heat exchange between MCH that circulates through the line L2 and the hydrogen-containing gas that circulates through the line L3. A temperature of the hydrogen-containing gas emitted from the dehydrogenation reaction unit 3 is higher than that of the MCH. Accordingly, in the heat exchange unit 2, the MCH is heated by heat of the hydrogen-containing gas. According to this, the MCH is supplied to the dehydrogenation reaction unit 3 in a state in which a temperature is raised. Note that, the MCH is mixed with an off-gas supplied from the hydrogen purification unit 8 through the line L7, and is supplied to the dehydrogenation reaction unit 3.

The dehydrogenation reaction unit 3 is a device that subjects the MCH to a dehydrogenation reaction to obtain hydrogen. That is, the dehydrogenation reaction unit 3 is s device that extracts hydrogen from the MCH by the dehydrogenation reaction using a dehydrogenation catalyst. The dehydrogenation catalyst is not particularly limited, and is selected, for example, from a platinum catalyst, a palladium catalyst, and a nickel catalyst. These catalysts may be carried on a carrier such as alumina, silica, and titania. A reaction of the organic hydride is a reversible reaction, and a direction of the reaction varies in response to a reaction condition (a temperature or a pressure) (restricted by chemical equilibrium). On the other hand, the dehydrogenation reaction is always an endothermic reaction in which the number of molecules increases. Accordingly, conditions of a high temperature and a low pressure are advantageous. Since the dehydrogenation reaction is the endothermic reaction, dehydrogenation reaction unit 3 is supplied with heat from the heating unit 4 through a heat medium that circulates through the lines L11 and L12. The dehydrogenation reaction unit 3 includes a mechanism that capable of exchanging heat between the MCH that flows through the dehydrogenation catalyst and the heat medium from the heating unit 4. The hydrogen-containing gas extracted in the dehydrogenation reaction unit 3 is supplied to the gas-liquid separation unit 6 through the line L3. The hydrogen-containing gas in the line L3 is supplied to the gas-liquid separation unit 6 in a state of containing liquid toluene as a mixture.

The heating unit 4 heats the heat medium and supplies the heat medium to the dehydrogenation reaction unit 3 through the line L 11. The heat medium after heating is returned to the heating unit 4 through the line L12. The heat medium is not particularly limited, but an oil or the like may be employed. Note that, the heating unit 4 may employ an arbitrary medium as long as the dehydrogenation reaction unit 3 can be heated. For example, the heating unit 4 may directly heat the dehydrogenation reaction unit 3 or may heat the MCH that is supplied to the dehydrogenation reaction unit 3 by heating, for example, the line L2. In addition, the heating unit 4 may heat both the dehydrogenation reaction unit 3 and the MCH that is supplied to the dehydrogenation reaction unit 3. For example, a burner or an engine may be employed as the heating unit 4.

The gas-liquid separation unit 6 is a tank that separates toluene from the hydrogen-containing gas. The gas-liquid separation unit 6 stores the hydrogen-containing gas that contains toluene as a mixture to gas-liquid separate hydrogen that is a gas and toluene that is a liquid from each other. In addition, the hydrogen-containing gas that is supplied to the gas-liquid separation unit 6 is cooled down by the heat exchange unit 2. Note that, the gas-liquid separation unit 6 may be cooled down by a cooling medium from a cold heat source. In this case, the gas-liquid separation unit 6 includes a mechanism capable of exchanging heat between the hydrogen-containing gas in the gas-liquid separation unit 6 and the cooling medium from the cold heat source. Toluene separated by the gas-liquid separation unit 6 is supplied to a toluene tank (not illustrated) through the line L4. The hydrogen-containing gas separated by the gas-liquid separation unit 6 is supplied to the hydrogen purification unit 8 through the lines L5 and L6 by a pressure of the compression unit 7. Note that, when the hydrogen-containing gas is cooled down, a part (toluene) of the gas is liquified, and can be separated from a gas (hydrogen) that is not liquified by the gas-liquid separation unit 6. When a gas is maintained at a low temperature, separation efficiency is raised, and when a pressure is raised, liquefaction of toluene further proceeds.

The hydrogen purification unit 8 removes a dehydrogenation product (toluene in this embodiment) from the hydrogen-containing gas that is obtained by the dehydrogenation reaction unit 3 and is gas-liquid separated by the gas-liquid separation unit 6. According to this, the hydrogen purification unit 8 purifies the hydrogen-containing gas to obtain high-purity hydrogen (purified gas). The purified gas that is obtained is supplied to the line L8. Note that, the off-gas that is generated in the hydrogen purification unit 8 is supplied to the dehydrogenation reaction unit 3 through the line L7.

The hydrogen purification unit 8 is different depending on a hydrogen purification method that is employed. Specifically, in a case of using membrane separation as the hydrogen purification method, the hydrogen purification unit 8 is a hydrogen separation device including a hydrogen separation membrane. In addition, in a case of using a pressure swing adsorption (PSA) method or a temperature swing adsorption (TSA) method as the hydrogen purification method, the hydrogen purification unit 8 is an adsorption removal device including a plurality of adsorption towers which store an adsorbent that adsorb impurities.

Description will be given of a case where the hydrogen purification unit 8 uses membrane separation. In this method, a hydrogen-containing gas pressurized to a predetermined pressure by a compression unit (not illustrated) is caused to permeate a membrane heated to a predetermined temperature, a dehydrogenation product is removed, and a high-purity hydrogen gas (purified gas) can be obtained. The pressure of the gas permeated the membrane is reduced in comparison to a pressure before permeating the membrane. On the other hand, a pressure of a gas that does not permeate the membrane is approximately the same as a predetermined pressure before permeating the membrane. At this time, a gas that does not permeate the membrane corresponds to the off-gas in the hydrogen purification unit 8.

The kind of the membrane that is applied to the hydrogen purification unit 8 is not particularly limited, and a porous membrane (separation by a molecular flow, separation by a surface diffusion flow, separation by capillary condensation operation, separation by molecular sieving operation, and the like), or a non-porous membrane are applicable. As the membrane that is applied to the hydrogen purification unit 8, for example, a metal membrane (a PbAg-based membrane, a PdCu-based membrane, an Nb-based membrane, or the like), a zeolite membrane, an inorganic membrane (a silica membrane, a carbon membrane, or the like), and a polymer membrane (a polyimide membrane or the like) can be employed.

Description will be given of a case of employing the PSA method as the removal method in the hydrogen purification unit 8. An adsorbent that is used in the PSA method has a property of adsorbing toluene contained in the hydrogen-containing gas under a high pressure, and desorbing the adsorbed toluene under a low pressure. The PSA method uses the property of the adsorbent. That is, when the inside of an adsorption tower is set to a high pressure, toluene contained in the hydrogen-containing gas is adsorbed on the adsorbent and is removed to obtain a high-purity hydrogen gas (purified gas). In a case where an adsorption function of the adsorbent decreases, the inside of the adsorption tower is set to a low pressure to desorb toluene adsorbed on the adsorbent, and a part of the purified gas removed in combination is made to flow back to remove the desorbed toluene from the inside of the adsorption tower, thereby regenerating the adsorption function of the adsorbent. At this time, the hydrogen-containing gas that contains at least hydrogen and toluene which is discharged when removing toluene from the inside of the adsorption tower corresponds to the off-gas from the hydrogen purification unit 8.

Description will be given of a case of employing the TSA method as the removal method in the hydrogen purification unit 8. An adsorbent that is used in the TSA method has a property of adsorbing toluene contained in the hydrogen-containing gas under an ordinary temperature, and desorbing the adsorbed toluene under a high temperature. The TSA method uses the property of the adsorbent. That is, when the inside of the adsorption tower is set to an ordinary temperature, toluene contained in the hydrogen-containing gas is adsorbed on the adsorbent and is removed to obtain a high-purity hydrogen gas (purified gas). In a case where the adsorption function of the adsorbent decreases, the inside of the adsorption tower is set to a high temperature to desorb toluene adsorbed on the adsorbent, and a part of high-impurity hydrogen removed in combination is caused to flow back to remove the desorbed toluene from the inside of the adsorption tower, thereby regenerating the adsorption function of the adsorbent. At this time, the hydrogen-containing gas that contains at least hydrogen and toluene which is discharged when removing toluene from the inside of the adsorption tower corresponds to the off-gas from the hydrogen purification unit 8.

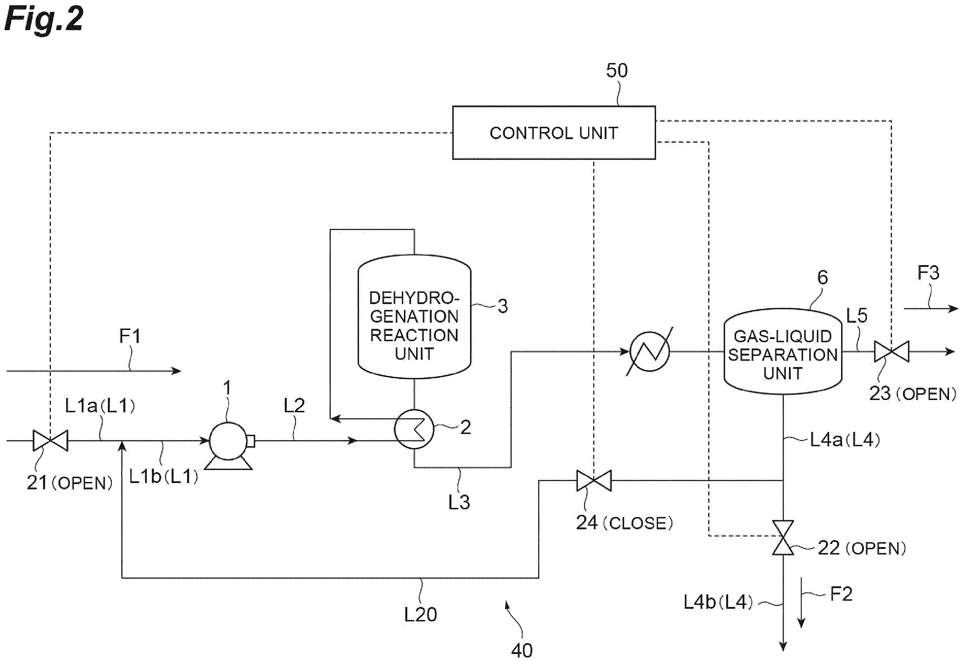

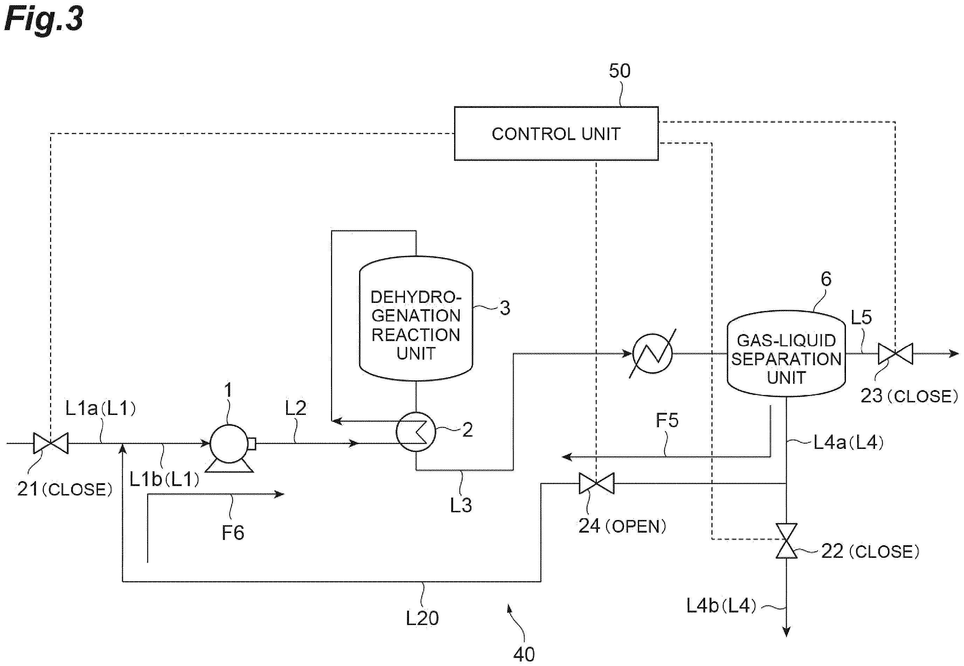

Next, characteristic portions of the above-described hydrogen supply system 100 will be described with reference to FIG. 2 and FIG. 3. FIG. 2 is a block diagram illustrating operation contents of the hydrogen supply system 100 in a typical operation state. FIG. 3 is a block diagram illustrating operation contents of the hydrogen supply system 100 in a standby state. As illustrated in FIG. 2 and FIG. 3, the hydrogen supply system 100 includes a circulation system 40 and a control unit 50.

The circulation system 40 is a system that circulates a reaction inactive fluid to the dehydrogenation reaction unit 3. The reaction inactive fluid is a fluid that substantially does not react with the dehydrogenation catalyst in the dehydrogenation reaction unit 3. The circulation system 40 includes a line L20 that extends from a middle position of the line L4 to a middle position of the line L1. Note that, in the line L4, an upstream side of a connection point with the line L20 is referred to as a first portion L4a, and a downstream side of the connection point is referred to as a second portion L4b. In addition, in the line L1, an upstream side of a connection point with the line L20 is referred to as a first portion L1a, and a downstream side of the connection point is referred to as a second portion L1b. At this time, the circulation system 40 is constituted by the line L20, the second portion L1b of the line L1, the line L2, the line L3, and the first portion L4a of the line L4.

Note that, a valve 21 is provided in the first portion L1a of the line L1. The valve 21 switches supply and supply stoppage of the raw material to the dehydrogenation reaction unit 3 by switching open and close from each other. A valve 22 is provided in the second portion L4b of the line L4. The valve 22 switches discharge and discharge stoppage of toluene from the gas-liquid separation unit 6 by switching open and close from each other. In addition, a valve 23 is provided in the line L5. The valve 23 switches supply and supply stoppage of the hydrogen-containing gas from the gas-liquid separation unit 6 to the downstream side from each other. A valve 24 is provided in the line L20. The valve 24 switches supply and supply stoppage of the reaction inactive fluid to the dehydrogenation reaction unit 3 by switching open and close from each other.

The circulation system 40 circulates toluene (dehydrogenation product) produced by the dehydrogenation reaction. That is, the circulation system 40 circulates toluene separated in the gas-liquid separation unit 6 after the dehydrogenation reaction by the dehydrogenation reaction unit 3 is completed. The toluene produced from the raw material in the dehydrogenation reaction, and thus even when the toluene is supplied to the dehydrogenation reaction unit 3 again, the dehydrogenation reaction does not occur in the dehydrogenation reaction unit 3. Note that, in a case where a small amount of raw material remains in toluene, the raw material causes the dehydrogenation reaction to occur, but in this specification, toluene in which a small amount of raw material remains is also handled as the reaction inactive fluid.

The control unit 50 performs control so that a reaction inactive fluid is circulated by the circulation system 40 in a case where production of the hydrogen-containing gas in the dehydrogenation reaction unit 3 is stopped. The control unit 50 is electrically connected to the valves 21, 22, 23, and 24. The control unit 50 transmits a signal for switching open and close to the valves 21, 22, 23, and 24 to control a flow of the fluid in the hydrogen supply system 100.

Specifically, as illustrated in FIG. 2, in a typical operation state, the control unit 50 sets the valve 21 in the line L1 to open, sets the valve 22 in the line L4 to open, sets the valve 23 in the line L5 to open, and sets the valve 24 in the line L20 to close. According to this, the raw material flows through the first portion L1a of the line L 1, flows through the second portion L1b of the line L1, and is supplied to the dehydrogenation reaction unit 3 through the liquid transfer pump 1 and the line L2 (refer to F1). In addition, the hydrogen-containing gas produced in the dehydrogenation reaction unit 3 flows through the line L3, and is supplied to the gas-liquid separation unit 6. Toluene separated in the gas-liquid separation unit 6 is discharged after circulating the line L4 (refer to F2). The hydrogen-containing gas from which toluene is separated in the gas-liquid separation unit 6 is supplied to the downstream side through the line L5 (refer to F3). At this time, since the valve 24 in the line L20 is set to close, toluene does not flow through the line L20, and is not supplied to the dehydrogenation reaction unit 3. As described above, toluene produced in the dehydrogenation reaction unit 3 is not circulated by the circulation system 40, and is discharged from the gas-liquid separation unit 6.

In a case where production of the hydrogen-containing gas in the dehydrogenation reaction unit 3 is stopped, the dehydrogenation reaction is also stopped. In this case, it enters a standby state so that the dehydrogenation reaction in the dehydrogenation reaction unit 3 can be restarted early when initiating production of the hydrogen-containing gas again. In the standby state, as illustrated in FIG. 3, the control unit 50 sets the valve 21 in the line L1 to close, sets the valve 22 in the line L4 to close, sets the valve 23 in the line L5 to close, and sets the valve 24 in the line L20 to open. According to this, passage of the raw material from the first portion L1a of the line L1 is regulated by the valve 21. In addition, passage of toluene separated in the gas-liquid separation unit 6 is regulated in the second portion L4b of the line L4 by the valve 22, and toluene passes through the line L20 from the first portion L4a of the line L4 (refer to F5). Then, toluene passes through the second portion L1b of the line L1 from the line L20, and is supplied to the dehydrogenation reaction unit 3 through the liquid transfer pump 1 and the line L2 (refer to F6). Toluene is heated by an influence by a heat medium from the heating unit 4 (refer to FIG. 1). Toluene in a heated state does not react in the dehydrogenation reaction unit 3, but passes through the dehydrogenation reaction unit 3 in a state of suppressing lowering in a temperature of the dehydrogenation catalyst. Toluene discharged from the dehydrogenation reaction unit 3 flows the line L3, the gas-liquid separation unit 6, and the first portion L4a of the line L4, and repeatedly circulates through the circulation system 40.

Then, when restarting the dehydrogenation reaction in the dehydrogenation reaction unit 3 to produce the hydrogen-containing gas, the control unit 50 switches open and close of the valves 21, 22, 23, and 24 to be a state illustrated in FIG. 2. At this time, since lowing in the temperature of the dehydrogenation reaction catalyst in the dehydrogenation reaction unit 3 is suppressed on standby, the dehydrogenation reaction can be restarted early.

Next, description will be given of an operation and an effect of the hydrogen supply system 100 according to this embodiment.

First, a hydrogen supply system according to a comparative example will be described. In the hydrogen supply system according to the comparative example, even in the standby state, the raw material is supplied to the dehydrogenation reaction unit 3, and lowering in the temperature of the dehydrogenation catalyst is suppressed. However, in the hydrogen supply system according to the comparative example, since reaction in the dehydrogenation reaction unit 3 proceeds, there is a problem that a loss of the raw material or produced hydrogen occurs.

In contrast, in the hydrogen supply system 100 according to this embodiment, the dehydrogenation reaction unit 3 subjects the raw material including a hydride to the dehydrogenation reaction to obtain the hydrogen-containing gas. The dehydrogenation reaction unit 3 performs the dehydrogenation reaction in a state in which the catalyst is heated. Here, the control unit 50 circulates a reaction inactive fluid by the circulation system 40 in a case where production of the hydrogen-containing gas in the dehydrogenation reaction unit 3 is stopped. In this case, the dehydrogenation reaction unit 3 can stand by while maintaining a temperature without performing the dehydrogenation reaction by causing the reaction inactive fluid to pass therethrough instead of the raw material. Since the dehydrogenation reaction unit 3 does not perform the dehydrogenation reaction, a loss of the raw material or hydrogen can be suppressed. In addition, since the hydrogen supply system 100 is subjected to a standby operation while maintaining a temperature of the dehydrogenation reaction, the hydrogen supply system 100 can be activated early. As described above, the system can be efficiently activated while suppressing a loss of the raw material or produced hydrogen.

The circulation system 40 may circulate a dehydrogenation product produced by the dehydrogenation reaction. In this case, the fluid produced in the dehydrogenation reaction unit 3 can be used as is as a fluid for circulation on standby.

The present disclosure is not limited to the above-described embodiment.

For example, circulation system 40 may circulate a fluid from the outside. Specifically, as illustrated in FIG. 1, the reaction inactive fluid from the outside may be supplied from the line L30 connected to the line L1, and the fluid may be circulated by the circulation system 40. In this case, an appropriate amount of fluid can be circulated by the circulation system. That is, in a case of circulating the dehydrogenation product as in the above-described embodiment, it is difficult to control that how much fluid can be circulated so as to circulate the dehydrogenation product existing in a line when the dehydrogenation reaction is stopped. On the other hand, in a case of supplying the fluid from the outside, the amount of circulation can be easily controlled.

In the above-described embodiment, a hydrogen station for FVC has been exemplified as the hydrogen supply system, but the hydrogen supply system may be, for example, a hydrogen supply system for distributed power supplies such as a power supply for household, and a power supply for emergency.

### Reference Signs List

3: dehydrogenation reaction unit, 40: circulation system, 50: control unit, 100: hydrogen supply system.

## Claims

1. A hydrogen supply system that supplies hydrogen, comprising:
a dehydrogenation reaction unit that subjects a raw material including a hydride to a dehydrogenation reaction to obtain a hydrogen-containing gas;
a circulation system that circulates a reaction inactive fluid to the dehydrogenation reaction unit; and
a control unit that controls the hydrogen supply system,
wherein the control unit circulates the reaction inactive fluid with the circulation system in a case where production of the hydrogen-containing gas in the dehydrogenation reaction unit is stopped.

2. The hydrogen supply system according to claim 1,
wherein the circulation system circulates a dehydrogenation product produced by the dehydrogenation reaction.

3. The hydrogen supply system according to claim 1,
wherein the circulation system circulates a fluid from the outside.
